# EUROPEAN PATENT APPLICATION

(11) **EP 2 301 984 A1**
(43) Date of publication of application: **30.03.2011**
(21) Application number: 10380121.3
(22) Date of filing: 23.09.2010
(51) Int. Cl.: C08G 63/00, C08L 67/06, C08J 5/08, C08K 7/14

(54) **Glass fiber reinforced polyester bottle replica**

(30) Priority: 23.09.2009 ES 200901911
(71) Applicant: Escudero Sanchez, Blas, 02600 Villarrobledo Albacete (ES)
(72) Inventor: Escudero Sanchez, Blas, 02600 Villarrobledo Albacete (ES)
(74) Representative: Ungria Lopez, Javier

(57) **Abstract**

The present invention relates to a bottle replica characterized in that it comprises: a) type-E glass fiber in the form of mat or felt comprising continuous or cut yarns, randomly distributed and agglomerated by a chemical binder, b) type-E glass fiber in the form of fabric comprising untwisted yarns, on which a plastic treatment compatible with the stratification resin has been practiced, and c) orthophthalic polyester resin. Likewise, it also refers to the use of said bottle replica, preferably, for promotional use, storing solids or liquids, etc.

## Description

### Field of the invention

The present invention belongs to the field of composite materials and, more specifically, to the industry of glass fiber reinforced plastics.

### Background of the invention

GFRPs (Glass fiber Reinforced Plastics) are mainly composed of a glass fiber resistant structure as reinforcement of a plastic material that acts as a binder. Among the main plastic materials used for manufacturing GFRPs the polyester stands out, from which it is worth to highlight its excellent mechanical and electrical properties, as well as its excellent dimensional stability.

Thus, by adding glass fiber to polyester resins is possible to improve their mechanical properties, as well as their dimensional stability and heat and corrosion resistance.

As a result of the excellent characteristics of these type of materials, there are many applications wherein they can be used both in the industry sector, as in the construction.

Thus, for example, in the application WO/2000/071484 a cement with improved properties due to the presence of glass fibers in its composition is described.

The application CN201358051, in turn, is directed to a horizontal-type storage tank made of glass fiber reinforced plastic.

Thus, the present invention is directed to a new composite material based on GFRP, the object of the invention being also its use in various applications such as storing solids or liquids, promotional use, etc.

### Description of the invention

Therefore the present invention relates to a bottle replica characterized in that it comprises:
a) type-E glass fiber in the form of mat or felt comprising continuous or cut yarns, randomly distributed and agglomerated by a chemical binder;
b) type-E glass fiber in the form of fabric comprising untwisted yarns, on which a plastic treatment compatible with the stratification resin has been practiced;
c) plastic resin, said resin being at least a thermostable liquid resin characterized in that it is aged at room temperature and low pressure, resulting in solid-state resins. Preferably, said plastic resin may consist of a hard-type, unsaturated, medium reactivity and low viscosity orthophthalic polyester resin, characterized by its hardness, elasticity, high impregnation capacity and load supporting ability.

Type-E glass fiber is borosilicate of low alkali oxide content (less than 1% by weight expressed as sodium oxide). In general, it is presented as filaments of approximately 10 mm in diameter, from which the felts (mat) or fabrics used for manufacturing the bottle replica are made.

In relation to the percentage of mat and fabric, this can vary depending on the product to be contained, since the two are perfectly compatible.

Additionally, additives can also be used, which contribute to the plastic resin polymerization. Preferably, these additives can consist of cobalt octoate, which acts as an accelerator, and methyl ethyl ketone peroxide (mek), which acts as a catalyst. Also, preferably, these additives are used in small quantities, depending on the temperature at the working area.

With regard to the method of manufacturing bottle replicas, this can be any conventional method of manufacturing glass fiber reinforced plastics (GFRP), being especially selected from any of the following methods;
a) rolling, either manually or by spray;
b) continuous winding or *filament winding;*
c) injection;
d) vacuum.

Thus, it is possible to obtain bottle replicas characterized in that they show various shapes and sizes. Preferably, the total diameter of the bottle replicas object of the invention is between 2 and 5 m. Regarding their height, this can vary, preferably, between 4 and 20 m, a height of 16 m being especially preferred.

Among the main advantages of the bottle replicas object of the invention, the following should be mentioned:
- no maintenance;
- high resistance to chemical agents (acids and corrosives)
- high resistance to high and low temperatures (between -20°C and +70°C);
- completely smooth interior and exterior surface;
- easy cleaning;
- low weight;
- likewise, they are suitable for different types of food products, preferably selected among wines, oils, juices, etc.

As a result of the previous advantages, applications provided for both in industry and in construction are multiple. Therefore, an additional object of the invention is also the use of bottle replicas described in different applications, in a preferred and not limitative manner, selected from:
- storing solids, liquids, etc.;
- promotional use of warehouses, mills, etc.;
- tourist promotional use, etc.

In the case of its use for storing wines, oils, juices, etc., these products are preferably subjected to a temperature of 80°C for a time of 100 hours, in order to achieve a perfect post-curing.

## Claims

1. Bottle replica **characterized** it that it comprises:
a) type-E glass fiber in the form of mat or felt comprising continuous or cut yarns, randomly distributed and agglomerated by a chemical binder;
b) type-E glass fiber in the form of fabric comprising untwisted yarns, on which a plastic treatment compatible with the stratification resin has been practiced;
c) orthophthalic polyester resin.

2. Bottle replica, according to claim 1, **characterized in that** it additionally comprises at least one additive selected between an accelerator and/or a catalyst.

3. Bottle replica, according to claim 2, **characterized in that** the accelerator consists of cobalt octoate and the catalyst consists of methyl ethyl ketone peroxide.

4. Bottle replica, according to any one of the preceding claims, **characterized in that** it comprises a total diameter between 2 and 5 meters and a height between 4 and 20 meters.

5. Use of a bottle replica, according to any one of the preceding claims, for storing solids and/or liquids.

6. Use of a bottle replica, according to any one of the preceding claims, as a promotional bottle replica.
